# EUROPÄISCHE PATENTANMELDUNG

(11) **EP 0 893 778 A2**
(43) Veröffentlichungstag der Anmeldung: **27.01.1999**
(21) Anmeldenummer: 98250259.3
(22) Anmeldetag: 15.07.1998
(51) Int. Cl.: G06K 7/10

(54) **Verfahren und Vorrichtung zum Positionieren einer Line Scan Kamera bei einer Sortiermaschine**

(30) Priorität: 21.07.1997 DE 19731817
(71) Anmelder: ELEXSO SORTIERTECHNIK GmbH, D-21035 Hamburg (DE)
(72) Erfinder: Mallant, Jos Peter, 21035 Hamburg (DE)
(74) Vertreter: UEXKÜLL & STOLBERG

(57) **Zusammenfassung**

Die Erfindung betrifft ein Verfahren zum Ausrichten von zwei Kameras (2, 2'), die auf einer gemeinsamen Achse (A) angeordnet und auf denselben Bereich (B) fokussiert sind, um diesen Bereich von gegenüberliegenden Seiten zeilenweise abzutasten. Es zeichnet sich dadurch aus, daß in der Ebene (E) des abzutastenden Bereichs (B) an den Rändern (R) des Blickfeldes der Kameras an jeder Seite der Achse eine Markierung (1) angebracht wird, deren Signal zur Synchronisierung und Ausrichtung der Kameras (2, 2') herangezogen wird.

## Beschreibung

Die Erfindung betrifft ein Verfahren gemäß Oberbegriff des Patentanspruchs 1 und eine Vorrichtung zur Durchführung des Verfahrens.

In Verbindung mit Sortiermaschinen für trockene, körnige Produkte wie beispielsweise Kaffeebohnen, Erdnüsse oder Mandeln ist es bereits bekannt, die Produkte mit Hilfe einer Rutsche zu vereinzeln und in Abhängigkeit von ihren Farbwerten durch ein oder mehrere optische Einrichtungen und mit diesen gekoppelte Auswerfer nach Gut- oder Schlechtwerten zu sortieren. Ein Beispiel für eine derartige Sortiermaschine ist die von der Anmelderin unter der Bezeichnung ELEXSO TR-4 hergestellte und vertriebene Maschine. Bei der ELEXSO TR-4 wird das körnige Produkt in einen Einlauftrichter geschüttet und von einem Vibrator zu vier parallelen Sortierrinnen transportiert, in denen es nach unten fällt und dabei auf eine Geschwindigkeit von bis zu 5 m/sec beschleunigt wird. Die Sortierrinnen stehen schräg, wobei die Schrägstellung so gewählt ist, daß das Produkt in nahezu freiem Fall entlang der Sortierrinnen bewegt wird und dabei an einer Betrachtungskamera vorbei fällt, an der die Helligkeits- bzw. Farbwerte ermittelt und mit vorgegebenen Gut- oder Schlechtwerten verglichen werden. Das so gewonnene Signal wird klassifiziert und kann Luftauswerfer, gegebenenfalls nach variabler Verzögerungszeit ansteuern, um bestimmte farblich abweichende Körner aus dem Produktstrom in einen separaten Auslaß zu fördern.

Zweckmäßigerweise werden dabei zwei Videokameras verwendet, die auf einer gemeinsamen Achse sitzen und von gegenüberliegenden Seiten auf den Produktstrom gerichtet sind. Idealerweise sehen dabei beide Kameras den gleichen Bereich, indem sie auf das gleiche Blickfeld ausgerichtet werden. Die heutzutage verwendeten Videokameras enthalten üblicherweise 3 CCD-Zeilen mit einer Pixelgröße von 14 × 14 µm. Sie lesen je Zeile 1024 Pixel aus, wobei zwischen Kameraobjektiv und den drei CCD-Zeilen ein Prisma geschaltet ist, das das einfallende Licht in die drei Farben RotGrün-Blau (R-G-B) aufspaltet. Das Prisma und die CCD-Zeilen sind so angeordnet, daß jede Zeile nur eine der drei Farben, R oder G oder B empfängt. Die Pixel einer Zeile sind von Anfang bis Ende in aufsteigender Reihenfolge numeriert. Das Bild jedes selben Punktes von einem Gegenstand, den die Kamera aufnehmen soll, muß in jeder CCD-Zeile auf den Pixeln mit der gleichen Nummer liegen. Das heißt, das Bild des Bildpunktes 1,1 muß jeweils auf den Pixeln 1 der drei CCD-Zeilen liegen, während das Bild des Bildpunktes 10,1 auf den Pixeln 10 der drei Zeilen liegen soll.

Da bei der Inspektion der zu sortierenden Gegenstände mit Bildern von 2 Kameras von gegenüberliegenden Seiten gearbeitet wird, ist es notwendig, beide Kameras auf den exakt gleichen Bereich zu fokussieren, damit die Bilder übereinstimmen. Treten jedoch Abweichungen in den Farbsignalen einer oder beider Kameras auf, also bei einem Versatz der Videosignale um 1 bis 2 Pixel, müßten die Kameras entweder nachsynchronisiert oder ausgetauscht werden.

Eine andere Sortiermaschine ist Gegenstand der EP-A-0 146 299. Anstelle von Kameras werden dort Leuchtdioden eingesetzt, die den Sortierbereich beleuchten. Die Signalverarbeitung erfolgt über einen optoelektronischen Wandler.

Aus der DE 195 32 842 C1 ist ein aus zwei Kameras bestehendes Bildaufnahmesystem bekannt, daß zur automatischen Adresserkennung auf Großbriefen oder Paketen dient. Beide Kameras sind von der selben Seite auf einen Lichtspalt ausgerichtet, auf dem das zu bearbeitende Objekt vorbeigeführt wird.

Aus der DE-OS 23 35 812 sind ein Verfahren und eine Anordnung zum Auslesen von auf einer Informationsträgerfläche kodierten Informationen bekannt, wobei die Abtastung einer Informationsträgerfläche unter Zuhilfenahme von Markierungen, beispielsweise Ortsmarken, vorgenommen wird.

Aus der DE 23 29 041 A1 sind ein Verfahren und eine Einrichtung zum Ausrichten des Elektronikstrahls einer Fernsehkamera auf einen beliebig ausgerichteten Datenträger bekannt, wobei die Fernsehkamera entsprechend der Ausrichtung eines abzutastenden Codes gedreht wird.

**Aufgabe** der Erfindung ist es, ein Verfahren zum leichteren Ausrichten von zwei Kameras auf denselben Bereich einer Sortiermaschine zu schaffen, mit dem Fehlausrichtungen der Kameras schnell erkannt werden.

**Aufgabe** der Erfindung ist es ferner, eine Vorrichtung zur Durchführung dieses Verfahrens zu schaffen.

Zur **Losung** dieser Aufgabe dient das Verfahren gemäß Patentanspruch 1 bzw. die Vorrichtung gemäß Patentanspruch 5.

Gemäß Erfindung werden also von den 1024 Pixel je Bildzeile der Videokameras die ersten und letzten 4 Pixel dazu herangezogen, um festzustellen, ob ein Ausrichtungsfehler vorliegt. Zu diesem Zweck wird gemäß Erfindung am Rand des Blickfeldes in der Ebene des abzutastenden Bereiches an jeder Seite der gemeinsamen Kameraachse eine Markierung angebracht, deren Signal zur Synchronisierung und Ausrichtung der Kameras herangezogen wird.

Zweckmäßigerweise ist die Markierung als Binärcode auf ein durchsichtiges Plättchen aufgebracht, so daß jede Kamera die gleiche Markierung sieht.

Die Erfindung wird im folgenden anhand von Figuren näher erläutert; es zeigen:
**Figur 1** in schematischer Darstellung eine Rutsche für eine Sortiermaschine mit zwei Videokameras;
**Figur 2** einen Bandförderer mit zwei auf den Austragbereich gerichteten Videokameras;
**Figur 3** zwei Bandförderer mit vier Videokameras; und
**Figur 4** ein Markierungsplättchen mit einem 4-Bit Code.

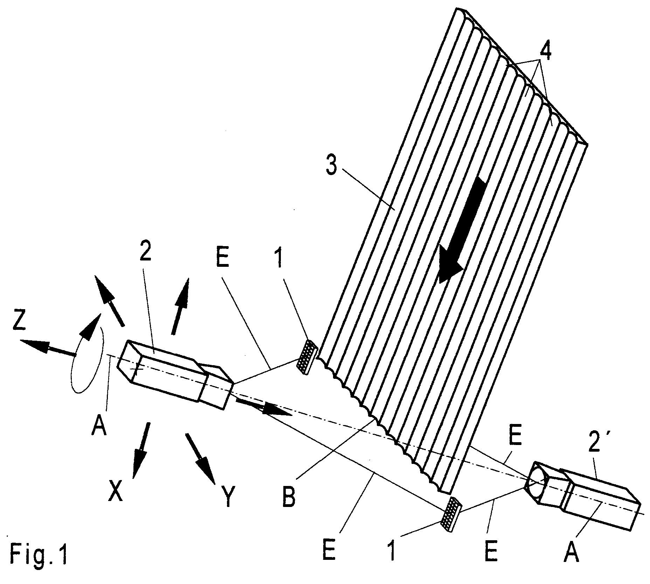

**Figur 1** zeigt eine schrägstehende Rutsche 3 für eine Sortiermaschine, beispielsweise des Typs ELEXSO TR-4 mit einer Anzahl von Rinnen 4, in denen die zu sortierenden Gegenstände in Richtung des Pfeils nach unten rutschen. Am unteren Ende der Rutsche 3 ist der Beobachtungs- und Ausstoßbereich vorgesehen, in dem die Farbsortierung erfolgt und das den angelegten Kriterien nicht entsprechende Gut durch Betätigung eines nicht dargestellten Ejektors beispielsweise durch einen Luftstrom ausgestoßen werden soll. Zu diesem Zweck sind auf den Bereich zwei Videokameras 2 mit CCD-Zeiles fokussiert, die auf einer gemeinsamen Achse sitzen und damit das die Rutsche 3 verlassende Gut gleichzeitig von vorn und hinten betrachten.

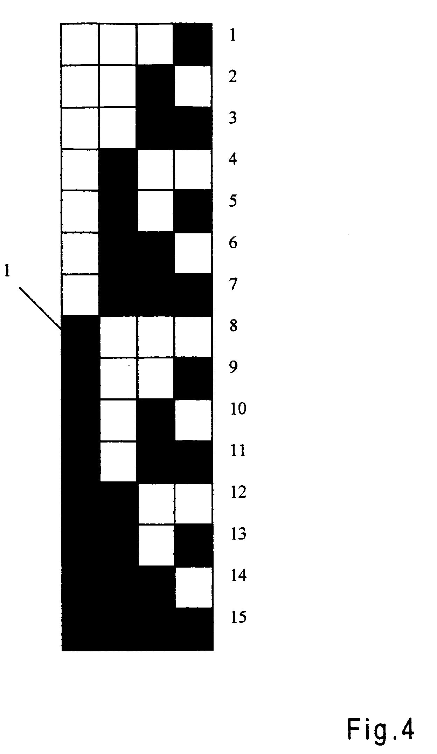

An beiden Seiten der Rutsche 3 und damit an den Rändern des Blickfeldes der Kameras 2 ist je ein Markierungsplättchen 1 angeordnet, das beispielsweise gemäß **Figur 4** gestaltet ist.

Bei der Ausführungsform gemäß **Figur 4** ist jedes Markierungsplättchen 1 ein durchsichtiges Plättchen, auf das ein 4-Bit Code durch Schwärzung in bestimmten Bereichen aufgedruckt ist. Der Code ist ein 8-4-2-1-Code, der 16 Kombinationen darstellen kann, von denen nur 15 benutzt werden. Die 16. Möglichkeit, nämlich Null, wurde weggelassen, da sie lediglich bedeutet: Kein Bereich ist geschwärzt, was aber auch für die Umgebung des Markierungsplättchens 1 gilt.

Je Videozeile sieht somit die vordere Kamera 2 als erste 4 Pixel beispielsweise die Binärdarstellung für "3". Für die hintere Kamera 2' muß dann das gleiche gelten, d.h. die letzten 4 Pixel der gleichen Videozeile müssen das gleiche Schwärzungsmuster enthalten, das die Zahl "3" darstellt, allerdings nicht von links nach rechts, sondern von rechts nach links gelesen. Es müssen aber nicht nur beide Kameras 2 und 2' auf den gleichen Bereich des Plättchens fokussiert sein, sondern es muß außerdem für jede Kamera gelten, daß in allen drei CCD-Zeilen für R, G und B das gleiche Pixel, nämlich die Binärdarstellung von "3" ausgelesen wird. Wenn dies nicht der Fall ist, dann hat eine Verschiebung stattgefunden, die entweder softwaremäßig nachsynchronisiert werden muß oder es müssen die Kameras ausgetauscht werden.

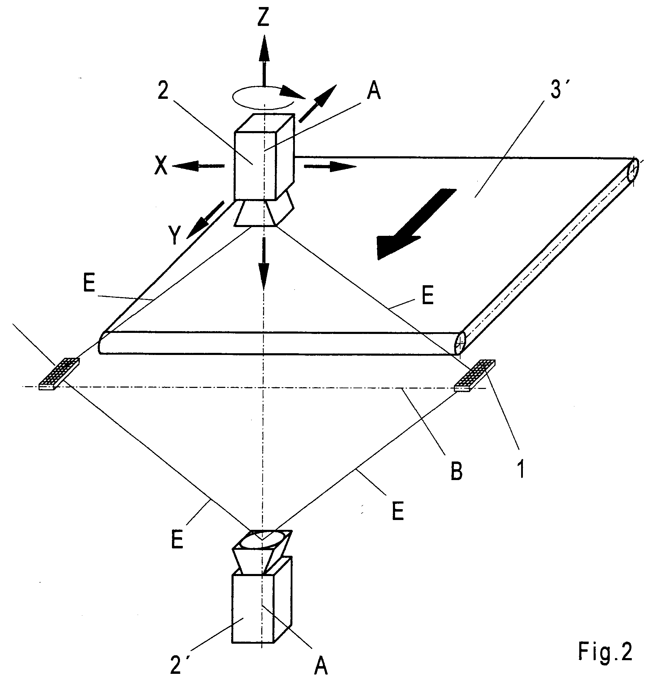

**Figur 2** zeigt eine andere Art Sortiervorrichtung mit einem horizontalen Bandförderer 3', über den der Produktstrom wiederum in Richtung des Pfeils geführt wird und vom Ende durch den Beobachtungsbereich, auf den die Kameras 2 und 2' fokussiert sind, auf dem Weg einer Wurfparabel herunter fällt. An beiden Seiten des Blickfeldes sind wiederum Markierungsplättchen, beispielsweise gemäß Figur 4 angeordnet.

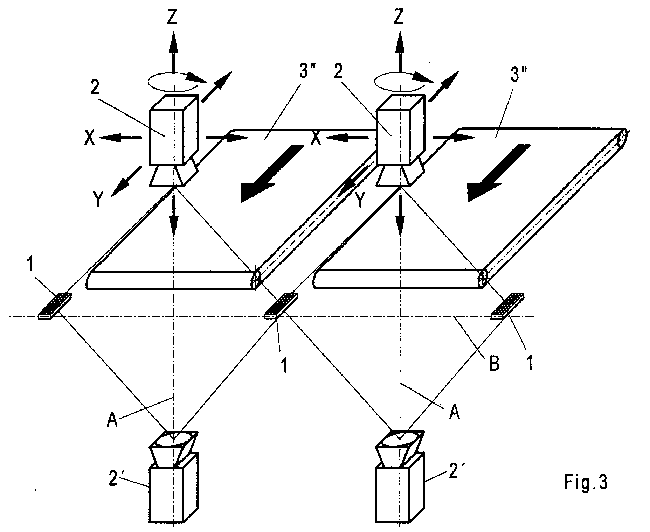

**Figur 3** zeigt eine ähnliche Ausführungsform wie Figur 2, wobei ein schmalerer Plattenförderer 3'' gewählt ist, von dem zwei nebeneinander betrieben werden. Demzufolge sind auf den Ausstoßbereich von oben wie auch von unten je zwei Videokameras 2, 2' gerichtet, so daß insgesamt vier Kameras zum Einsatz kommen, die in Verbindung mit drei Markierungsplättchen zur Feststellung der richtigen Kamerajustierung dienen.

## Patentansprüche

1. Verfahren zum Ausrichten von zwei Kameras (2, 2'), die auf denselben Bereich (B) fokussiert sind, um diesen Bereich von gegenüberliegenden Seiten zeilenweise abzutasten, **dadurch gekennzeichnet**, daß in der Ebene (E) des abzutastenden Bereichs (B) an den Rändern (R) des Blickfeldes der Kameras an jeder Seite der Achse eine Markierung (1) angebracht wird, deren Signal zur Synchronisierung und Ausrichtung der Kameras (2, 2') herangezogen wird.

2. Verfahren nach Anspruch 1, **dadurch gekennzeichnet**, daß als Markierungen (1) Plättchen mit einem Binärcode verwendet werden.

3. Verfahren nach Anspruch 1 oder 2, **dadurch gekennzeichnet**, daß als Binärcode ein 4-Bit Code verwendet wird.

4. Verfahren nach Anspruch 3, **dadurch gekennzeichnet**, daß als 4-Bit Code ein 8-4-2-1-Code verwendet wird.

5. Vorrichtung zur Durchführung des Verfahrens nach einem der Ansprüche 1 bis 4, **dadurch gekennzeichnet,** daß auf jede Seite des Markierungs-Plättchens (1) der gleiche Binärcode aufgebracht ist.

6. Vorrichtung nach Anspruch 5, **dadurch gekennzeichnet**, daß das Markierungs-Plättchen (1) durchsichtig ist und den Binärcode in Form von lokalen Schwärzungen aufweist.

7. Vorrichtung nach Anspruch 6, **dadurch gekennzeichnet**, daß die lokalen Schwärzungen des Binärcodes die Dezimalzahlen 1-15 darstellen, die übereinander angeordnet sind.

8. Vorrichtung nach einem der Ansprüche 5 bis 7, **dadurch gekennzeichnet,** daß das Markierungs-Plättchen (1) eine Matrix von 4 x 15 Feldern aufweist.
